# EUROPÄISCHE PATENTSCHRIFT

(11) **EP 2 233 889 B1**
(45) Veröffentlichungstag und Bekanntmachung des Hinweises auf die Patenterteilung: **01.06.2011**
(21) Anmeldenummer: 09001393.9
(22) Anmeldetag: 02.02.2009
(51) Int. Cl.: G01D 5/14

(54) **Messvorrichtung zur redundanten Erfassung eines Drehwinkels und Halbleiterchip für eine solche Messvorrichtung**
Measuring device for redundant measuring of a rotation angle and semiconductor chip for such a measuring device
Dispositif de mesure destiné à la saisie redondante d'un angle de rotation et puce semi-conductrice pour un tel dispositif de mesure

(43) Veröffentlichungstag der Anmeldung: 29.09.2010
(73) Patentinhaber: Micronas GmbH, 79108 Freiburg i. Br. (DE)
(72) Erfinder: Schubert, Jens, 79111 Freiburg (DE)
(74) Vertreter: Koch Müller Patentanwaltsgesellschaft mbH

(56) Entgegenhaltungen:
- DE-A1- 10 320 057
- GB-A- 2 350 196

## Beschreibung

Die Erfindung betrifft eine Messvorrichtung zur berührungslosen redundanten Erfassung eines Drehwinkels eines Körpers, mit einer Magnetfelderzeugungseinrichtung zum Erzeugen mindestens eines von dem zu erfassenden Drehwinkel abhängigen Magnetfelds, mit einem Halbleiterchip, in den zumindest eine erste Sensoranordnung und eine erste Signalverarbeitungseinrichtung integriert sind, wobei die erste Sensoranordnung wenigstens zwei erste Magnetfeldsensoren aufweist, die zum Erfassen von zueinander phasenverschobenen ersten Messsignalen des Magnetfelds angeordnet sind, wobei die erste Signalverarbeitungseinrichtung einen ersten Ausgang aufweist, an den in Abhängigkeit von den ersten Messsignalen ein erstes Drehwinkelsignal ausgebbar ist, mit mindestens einer zweiten Sensoranordnung und einer zweiten Signalverarbeitungseinrichtung, wobei die zweite Sensoranordnung wenigstens zwei zweite Magnetfeldsensoren aufweist, die zum Erfassen von zueinander phasenverschobenen zweiten Messsignalen des Magnetfelds angeordnet sind, wobei die zweite Signalverarbeitungseinrichtung einen zweiten Ausgang aufweist, an den in Abhängigkeit von den zweiten Messsignalen ein zweites Drehwinkelsignal ausgebbar ist, und mit einem außerhalb des Halbleiterchips angeordneten Steuergerät, das eine mit dem ersten Ausgang und dem zweiten Ausgang verbundene Vergleichseinrichtung aufweist, mittels der beim Auftreten einer Abweichung zwischen den Drehwinkelsignalen ein Fehlersignal generierbar ist. Ferner betrifft die Erfindung einen Halbleiterchips für eine solche Messvorrichtung, wobei in den Halbleiterchip zumindest eine erste Sensoranordnung, eine zweite Sensoranordnung und eine erste Signalverarbeitungseinrichtung integriert sind, wobei die erste Sensoranordnung wenigstens zwei erste Magnetfeldsensoren aufweist, die zum Erfassen von zueinander phasenverschobenen ersten Messsignalen eines vom Drehwinkel eines Körpers abhängigen Magnetfelds angeordnet sind, wobei die zweite Sensoranordnung wenigstens zwei zweite Magnetfeldsensoren aufweist, die zum Erfassen von zueinander phasenverschobenen zweiten Messsignalen des Magnetfelds angeordnet sind, wobei die ersten Magnetfeldsensoren über die Signalverarbeitungseinrichtung mit einem Ausgang des Halbleiterchips verbunden sind und die Signalverarbeitungseinrichtung derart ausgestaltet ist, dass am Ausgang ein von den ersten Messsignalen abhängiges Drehwinkelsignal ausgebbar, ist.

Eine derartige Messvorrichtung zum Messen des Istwinkels einer Drosselklappe einer in einem Kraftfahrzeug eingebauten Hubkolbenverbrennungsmaschine ist aus der Praxis bekannt. Mit der Drosselklappe steht ein diametral magnetisierter Permanentmagnet in Antriebsverbindung, der sich beim Verändern des Drosselklappenwinkels synchron zur Bewegung der Drosselklappe um seine Achse dreht. Die Messvorrichtung weist ein Halbleiterbauelement vom Typ Melexis MLX90316 auf, das in einem Kunststoffgehäuse zwei identisch aufgebaute Halbleiterchips enthält, die nebeneinander angeordnet sind. In jedes dieser Halbleiterchips ist jeweils eine Sensoranordnung mit zwei Magneifeldsensoren integriert, die jeweils einen in den Halbleiterchip integrierten Hallsensor und einen damit zusammenwirkenden, auf dem Halbleiterchip angeordneten magnetischen Flusskonzentrator aufweisen. Die Magnetfeldsensoren sind mit ihren Messachsen um 90° bezüglich einer normal zur Chipebene angeordneten Achse versetzt. Beim Verstellen der Drosselklappe ergibt sich dadurch ein Phasenversatz zwischen den mit Hilfe der Magnetfeldsensoren erfassten analogen Messsignalen.

In jeden der beiden Halbleiterchips ist jeweils eine Signalverarbeitungseinrichtung integriert, die einen Multiplexer, einen Verstärker, einen Analog-Digital-Konverter, einen Mikroprozessor, einen RAM, ein EPROM und ein ROM umfasst. Mit Hilfe des Analog-Digital-Konverters werden die zueinander phasenverschobenen analogen Messsignale der Magnetfeldensoren jeweils in ein Digitalsignal konvertiert und in den Mikroprozessor eingelesen. Zum Ermitteln der absoluten Winkelposition der Drosselklappe wird mit Hilfe des Mikroprozessors und einer im Speicher abgelegten Look-Up-Tabelle aus den Messsignalen der Quotient gebildet und aus diesem der Arcus-Tangens berechnet. Das so erhaltene digitale Signal wird mit Hilfe eines Digital-Analog-Konverters in ein Analogsignal konvertiert und als Drehwinkelsignal an einen dem betreffenden Halbleiterchip zugeordneten, aus diesem herausgeführten Ausgang ausgegeben.

Die Ausgänge für die Drehwinkelsignale der beiden Halbleiterchips sind mit einem von dem Halbleiterchip entfernt angeordneten Steuergerät verbunden, das eine Vergleichseinrichtung enthält, in der die Drehwinkelsignale der beiden Halbleiterchips miteinander verglichen werden. Beim Auftreten einer Abweichung zwischen den Drehwinkelsignalen wird ein Fehlersignal generiert. Durch die redundante Erfassung des Drosselklappen-Drehwinkels und den Vergleich der Drehwinkelsignale im Steuergerät kann der Ausfall eines der beiden Halbleiterchips erkannt werden. Dadurch ist es möglich, die Hubkolbenverbrennungsmaschine beim Auftreten dieses Fehlers in einen sicheren Betriebszustand zu überführen.

Die redundante Erfassung des Drehwinkels hat jedoch den Nachteil, dass zwei vollwertige Halbleiterchips benötigt werden. Dadurch verdoppeln sich gegenüber einer Messvorrichtung, die den Drehwinkel nicht redundant misst, die Chipfläche und die Kosten für das Halbleiterbauelement. Ungünstig ist außerdem, dass die Signalverarbeitungseinrichtungen bei der Herstellung der Halbleiterchips einem zeitaufwändigen Test unterzogen werden muss. Die Herstellung des Halbleiterbauelements ist also auch zeitaufvändig. Der Mehraufwand für die redundante Drehwinkelmessung könnte zwar dadurch eingespart werden, dass auf die redundanten Bauteile verzichtet wird. Dann würde aber die Betriebssicherheit des Kraftfahrzeugs abnehmen.

Aufgabe der Erfindung ist es, eine Messvorrichtung der eingangs genannten Art zu schaffen, die kostengünstig herstellbar ist und dennoch eine redundante Messung des Drehwinkels ermöglicht. Außerdem besteht die Aufgabe, einen Halbleiterchip für eine solche Messvorrichtung bereitzustellen.

Diese Aufgabe wird bezüglich der Messvorrichtung dadurch gelöst, dass die zweite Signalverarbeitungseinrichtung in dem außerhalb des Halbleiterchips angeordneten Steuergerät vorgesehen ist.

Die Signalverarbeitung für die zweite Sensoranordnung wird also in dem Steuergerät durchgeführt, so dass auf dem die zweite Sensoranordnung aufweisenden Halbleiterchip eine komplette Signalverarbeitungseinrichtung eingespart werden kann. In vorteilhafter Weise reduzieren sich dadurch die Chipfläche und die Herstellungskosten für den Halbleiterchip erheblich. Die in dem Steuergerät vorgesehene Signalverarbeitungseinrichtung kann gegebenenfalls auf einem in das Steuergerät integrierten Mikroprozessor durchgeführt werden, der bei Bedarf zusätzlich noch für weitere Funktionen genutzt werden kann. Somit können die in dem Steuergerät ohnehin vorhandenen Komponenten für die zweite Signalverarbeitungseinrichtung mitgenutzt werden. Die zweite Signalverarbeitungseinrichtung kann gegebenenfalls eine geringere Verarbeitungsgeschwindigkeit aufweisen als die erste Signalverarbeitungseinrichtung, da es ausreicht, wenn die Drehwinkelsignale in bestimmten Zeitabständen miteinander verglichen werden. Wenn beim Vergleich der redundanten Drehwinkelsignale kein Fehler festgestellt wird, wird bevorzugt das von der ersten, schnelleren Signalverarbeitungseinrichtung bereitgestellte Drehwinkelsignal für die weitere Verarbeitung beispielsweise als Istsignal in einem Regelkreis verwendet.

Bei einer bevorzugten Ausgestaltung der Erfindung sind die zweiten Magnetfeldsensoren in den Halbleiterchip integriert. Die erste Signalverarbeitungseinrichtung und sämtliche für die redundante Erfassung des Drehwinkelsignals benötigten Magnetfeldsensoren können also in nur einen Halbleiterchip integriert sein. Die Messvorrichtung ist dadurch noch kostengünsfiger herstellbar.

Bei einer anderen vorteilhaften Ausgestaltung der Erfindung weist die Messvorrichtung zusätzlich zu dem ersten Halbleiterchip mindestens einen zweiten, in dem Magnetfeld angeordneten Halbleiterchip auf, wobei die zweiten Magnetfeldsensoren in dem mindestens einen zweiten Halbleiterchip vorgesehen sind. Dabei können die Halbleiterchips in dasselbe Bauelementgehäuse eingebaut sein. Es ist aber auch denkbar, dass die Halbleiterchips in voneinander getrennten Bauelementgehäusen untergebracht sind. In diesem Fall können die jeweils aus dem Halbleiterchip und dem Bauelementgehäuse gebildeten elektronischen Bauelemente unabhängig voneinander hergestellt und getestet werden.

Vorteilhaft ist, wenn die erste Signalverarbeitungseinrichtung und die zweite Signalverarbeitungseinrichtung einen unterschiedlichen Aufbau aufweisen. Dadurch wird bei der Erfassung der miteinander zu vergleichenden Drehwinkelsignale eine noch größere Redundanz ermöglicht. Außerdem reduziert sich die Wahrscheinlichkeit, dass die erste und die zweite Signalverarbeitungseinrichtung gleichzeitig ausfallen.

Bei einer zweckmäßigen Ausführungsform der Erfindung ist die erste Signalverarbeitungseinrichtung derart ausgestaltet ist, dass das erste Drehwinkelsignal als Analogsignal am ersten Ausgang und/oder die zweite Signalverarbeitungseinrichtung ist derart ausgestaltet ist, dass das zweite Drehwinkelsignal als Analogsignal am zweiten Ausgang ausgebbar ist. Die Ausgangssignale können dann auf einfache Weise mit Hilfe eines analogen Differenzglieds miteinander verglichen werden.

Bevorzugt sind die dass die ersten Magnetfeldsensoren mit Ihren Messachsen quer zueinander und/oder die zweiten Magnetfeldsensoren sind mit Ihren Messachsen quer zueinander angeordnet sind. Dadurch ist es möglich, die zueinander phasenverschobenen Messsignale des Magnetfelds am selben Ort zu messen. Es sind aber auch andere Ausgestaltungen denkbar, bei denen die Phasenverschiebung zwischen den Messsignalen dadurch erreicht wird, dass die Magnetfeldsensoren in Bewegungsrichtung des Magnetfelds voneinander beabstandet sind. In diesem Fall können die Magnetfeldsensoren mit Ihren Messachsen auch parallel zueinander angeordnet sein.

Vorteilhaft ist, wenn die ersten Magnetfeldsensoren und/oder die zweiten Magnetfeldsensoren Hallplatten aufweisen, die in einen Halbleiterchip integriert sind und mit Ihrer Erstreckungsebene quer zur Chipebene des Halbleiterchips angeordnet sind. Es kommen also sogenannte vertikale Hallplatten zur Anwendung. Dadurch ist es möglich, die den unterschiedlichen Messachsen zugeordneten Hallplatten in denselben Halbleiterchip zu integrieren, ohne den magnetischen Fluss mit Hilfe eines magnetisch leitenden Flusskonzentrators in seiner Richtung ablenken zu müssen.

Eine besonders große Redundanz kann dadurch erreicht werden, dass die ersten Magnetfeldsensoren nach einem anderen Messprinzip arbeiten als die zweiten Magnetfeldsensoren. So ist es beispielsweise möglich, dass die Magnetfeldsensoren der einen Sensoranordnung Hallsensoren und die Magnetfeldsensoren der anderen Sensoranordnung magnetoresistive Sensoren sind.

Bei einer bevorzugten Ausführungsform der Erfindung weist jeder zweite Magnetfeldsensor jeweils einen Ausgangsanschluss für sein zweites Messsignal auf, wobei jeder dieser Ausgangsanschlüsse jeweils mit einem ersten Anschluss eines ersten Multiplexers verbunden ist, wobei ein wahl- oder wechselweise mit den ersten Anschlüssen verbindbarer zweiter Anschluss des ersten Multiplexers über eine Verbindungsleitung mit einem dritten Anschluss eines zweiten Multiplexers verbunden ist, wobei der zweite Multiplexer eine der Anzahl der ersten Anschlüssen entsprechende Anzahl vierter Anschlüsse aufweist, die wahl- oder wechselweise mit dem dritten Anschluss verbindbar und jeweils an einem Eingang der zweiten Signalverarbeitungseinrichtung angeschlossen sind, dass ein Taktgeber zum Erzeugen eines Triggersignals vorgesehen ist, der zum Synchronisieren der Multiplexer mit Adresssteuereingängen der Multiplexer verbunden ist. Für die Übertragung der analogen Messsignale der zweiten Magnetfeldsensoren zu dem Steuergerät dann nur eine zusätzliche Leitung benötigt.

Besonders vorteilhaft ist, wenn der erste Multiplexer in den ersten Halbleiterchip und der Taktgeber in das Steuergerät integriert sind, wenn der erste Ausgang der ersten Sensoranordnung aus dem ersten Halbleiterchip herausgeführt ist, und wenn der Taktgeber über den ersten Ausgang mit dem Adresssteuereingang des ersten Multiplexers verbindbar oder verbunden ist. Für das Auslesen der analogen Messsignale der zweiten Magnetfeldsensoren aus dem Halbleiterchip wird dann nur ein zusätzlicher Außenanschluss an dem Halbleiterchip benötigt.

Bezüglich des Halbleiterchips wird die vorstehend genannte Aufgabe dadurch gelöst, dass der Halbleiterchip mindestens einen mit den zweiten Magnetfeldsensoren verbundenen Außenanschluss hat, und dass über den mindestens einen Außenanschluss die zweiten Messsignale aus dem Halbleiterchip auslesbar sind.

Auf dem Halbleiterchip ist also nur eine einzige Signalverarbeitungseinrichtung vorgesehen, die aus den Messsignalen der ersten Magnetfeldsensoren ein erstes Drehwinkelsignal ermittelt und an den Ausgang des Halbleiterchips anlegt. Die Messsignale der zweiten Magnetfeldsensoren werden dagegen als Rohsignale direkt an den mindestens einen Außenanschluss des Halbleiterchips ausgegeben. Der Halbleiterchip kann dadurch kostengünstig mit einer kleinen Chipfläche hergestellt werden. Außerhalb des Halbleiterchips kann zu dessen Funktionsüberprüfung aus den Messsignalen der zweiten Magnetfeldsensoren ein zweites Drehwinkelsignal gebildet und mit dem ersten Drehwinkelsignal verglichen werden. Der Halbleiterchip kann in einem Kraftfahrzeug zur Erfassung eines für die Betriebssicherheit des Kraftfahrzeugs relevanten Drehwinkelsignals zur Anwendung kommen, insbesondere eines Drosselklappenstellwinkels, eines Lenkwinkels, eines Fahrpedalwinkels oder eines Torsionswinkels eines Lenkungsteils (Lenkmomentmessung).

Weitere vorteilhafte Ausgestaltungen der Erfindung sind in den Unteransprüchen beschrieben.

Nachfolgend ist ein Ausführungsbeispiel der Erfindung anhand der Zeichnung näher erläutert. Es zeigt
- Fig. 1: ein Blockschaltbild eines Halbleiterchips zur redundanten Erfassung eines Drehwinkels eines Körpers, und
- Fig. 2: eine den Halbleiterchip enthaltende Messvorrichtung zur berührungslo- sen redundanten Erfassung des Drehwinkels.

Eine Messvorrichtung 1 zur berührungslosen redundanten Erfassung eines Drehwinkels eines Körpers weist eine in der Zeichnung nicht näher dargestellte Magnetfelderzeugungseinrichtung auf, die einen um eine Drehachse drehbar gelagerten Permanentmagneten hat. Der Permanentmagnet hat von seiner Drehachse beabstandete Magnetpole, die derart angeordnet sind, dass in Umfangsrichtung ungleichnamige Magnetpole einander abwechseln. Der Permanentmagnet steht mit einem drehbar oder verschwenkbar gelagerten Körper eines Kraftfahrzeugs in Antriebsverbindung, dessen Drehwinkel für die Betriebssicherheit des Kraftfahrzeugs von Bedeutung ist.

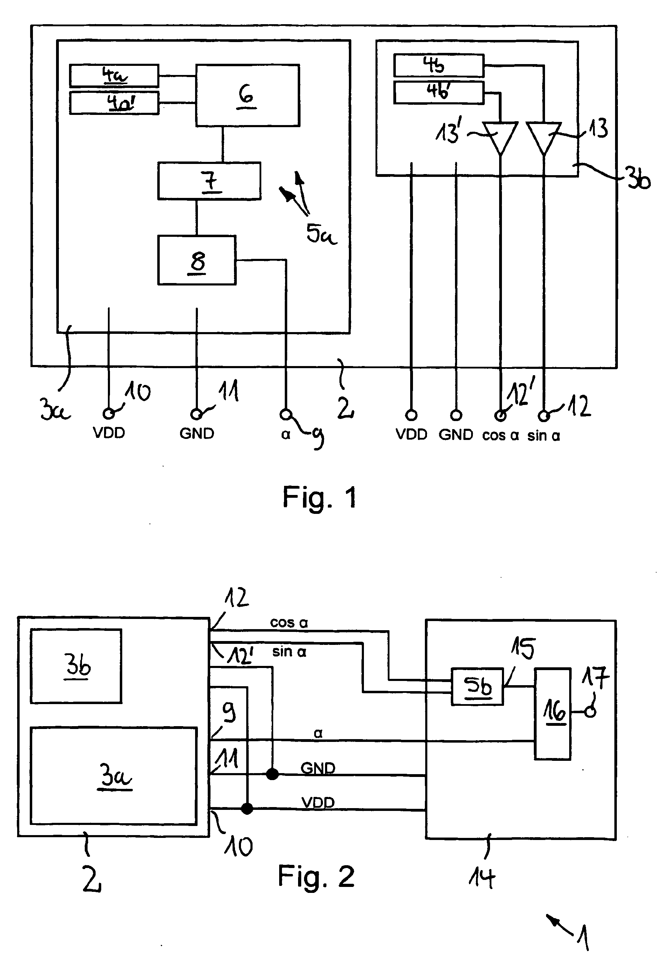

Die Messvorrichtung 1 weist ferner einen Halbleiterchip auf, in den ein erster Schaltungsblock 3a und ein zweiter Schaltungsblock 3b integriert sind. Wie in Fig. 1 erkennbar ist, umfasst der erste Schaltungsblock 3a eine erste Sensoranordnung mit zwei ersten Magnetfeldsensoren 4a, 4a'. Die Magnetfeldsensoren 4a, 4a' sind als Hallsensoren ausgestaltet und haben jeweils eine Hallplatte, die mit ihrer Erstreckungsebene rechtwinklig zur Chipebene des Halbleiterchips 2 angeordnet ist. Die Ebene des einen ersten Hallsensors 4a ist rechtwinklig zur Ebene des anderen ersten Hallsensors 4a' angeordnet Die ersten Hallsensoren 4a, 4a' sind in der Aufsicht auf die Chipebene vorzugsweise an derselben Stelle auf dem Halbleiterchip 2 angeordnet Sie können sich gegenseitig durchdringen oder übereinander gestapelt sein. Da die Ebenen der Hallplatten rechtwinklig zueinander verlaufen, ist das Messsignal des einen ersten Hallsensors 4a um 90° zum Messsignal des anderen ersten Hallsensors 4a' phasenverschoben.

In Fig. 1 ist außerdem erkennbar, dass der erste Schaltungsblock 3a eine erste Signalverarbeitungseinrichtung 5a aufweist, die einen digitale Signalprozessorstufe 6, eine erste, sogenannte CORDIC-Schaltung 7 und eine Ausgangsstufe 8 umfasst. Die Signalprozessorstufe 6 hat einen in der Zeichnung nicht näher dargestellten Analog-Digital-Konverter, mit dessen Hilfe die analogen Messsignale der ersten Magnetfeldsensoren 4a, 4a' in Digitalsignale konvertiert werden. Diese werden dann digital gefiltert und an Eingänge der ersten CORDIC-Schaltung 7 angelegt, die zur Bildung eines digitalen Drehwinkelsignals den Arcustangens aus dem Quotient der Messsignale bildet. Das so erhaltene Drehwinkelsignal wird mit Hilfe eines Digital-Analog-Konverters in der Ausgangsstufe 8 in ein erstes analoges Direktwinkelsignal konvertiert und an einen aus dem Halbleiterchip 2 herausgeführten ersten Ausgang 9 angelegt.

In Fig. 1 ist noch erkennbar, dass aus dem Halbleiterchip 2 außerdem Stromversorgungsanschlüsse 10, 11 herausgeführt sind, an die eine Betriebsspannung angelegt wird.

Zusätzlich zu der ersten Sensoranordnung ist in den Halbleiterchip 2 eine zweite Sensoranordnung integriert, die zwei zweite Magnetfeldsensoren 4b, 4b' aufweist. Auch die zweiten Magnetfeldsensoren 4b, 4b' sind als Hallsensoren mit einer rechtwinklig zur Chipebene des Halbleiterchips 2 angeordneten Hallplatte ausgestaltet.

Die Ebene des einen zweiten Magnetfeldsensors 4b ist rechtwinklig zur Ebene des anderen zweiten Magnetfeldsensors 4b' angeordnet Die zweiten Magnetfeldsensoren 4b, 4b' sind in der Aufsicht auf die Chipebene vorzugsweise an derselben Stelle auf dem Halbleiterchip 2 angeordnet. Sie können sich gegenseitig durchdringen oder übereinander gestapelt sein. Da die Ebenen der Hallplatten rechtwinklig zueinander verlaufen, ist das Messsignal des einen zweiten Hallsensors 4b um 90° zum Messsignal des anderen zweiten Hallsensors 4b' phasenverschoben.

In Fig. 1 ist erkennbar, dass der Halbleiterchip 2 zur Ausgabe der Messsignale der zweiten Magnetfeldsensoren 4b, 4b' jeweils einen Außenanschluss 12, 12' aufweist. Ein Messsignalausgang des einen zweiten Magnetfeldsensors 4b ist über einen erste Verstärkerstufe 13 mit einem ersten Außenanschluss 12 und ein Messsignalausgang des anderen zweiten Magnetfeldsensors 4b' ist über einen zweite Verstärkerstufe 1 3' mit einem zweiten Außenanschluss 12' verbunden.

In Fig. 2 ist erkennbar, dass der erste Ausgang 9 und die Außenanschlüsse 12, 12' mit einem von dem Halbleiterchip 2 beabstandeten Steuergerät 14 elektrisch verbunden sind. In dem Steuergerät 14 ist eine zweite Signalverarbeitungseinrichtung 5b angeordnet, die eine zweite CORDIC-Schaltung aufweist, die einen ersten, mit dem ersten Außenanschluss 12 verbunden Eingang und einen zweiten, mit dem zweiten Außenanschluss 12' verbunden Eingang aufweist Mit Hilfe der zweiten CORDIC-Schaltung wird zur Bildung eines analogen zweiten Drehwinkelsignals der Arcustangens aus dem Quotient der Messsignale des dritten Magnetfeldsensors 4b und des vierten Magnetfeldsensors 4b' gebildet. Das zweite Drehwinkelsignal wird an einem zweiten Ausgang 15 bereitgestellt.

In das Steuergerät 14 ist außerdem eine Vergleichseinrichtung 16 integriert, die einen ersten Vergleichereingang und einem zweiten Vergleichereingang aufweist. Der erste Vergleichereingang ist mit dem das erste Drehwinkelsignal aufweisenden ersten Ausgang 9 der ersten Signalverarbeitungseinrichtung 5a und der zweite Vergleichereingang ist mit dem das zweite Drehwinkelsignal aufweisenden zweiten Ausgang 15 der zweiten Signalverarbeitungseinrichtung 5b verbunden.

An einem Vergleicherausgang 17 der Vergleichseinrichtung 16 wird ein Fehlersignal erzeugt, wenn eine unzulässig hohe Abweichung zwischen dem ersten Drehwinkelsignale und dem zweiten Drehwinkelsignal auftritt.

## Patentansprüche

1. Messvorrichtung (1) zur berührungslosen redundanten Erfassung eines Drehwinkels eines Körpers, mit einer Magnetfelderzeugungseinrichtung zum Erzeugen mindestens eines von dem zu erfassenden Drehwinkel abhängigen Magnetfelds, mit einem Halbleiterchip (2), in den zumindest eine erste Sensoranordnung und eine erste Signalverarbeitungseinrichtung (5a) integriert sind, wobei die erste Sensoranordnung wenigstens zwei erste Magnetfeldsensoren (4a, 4a') aufweist, die zum Erfassen von zueinander phasenverschobenen ersten Messsignalen des Magnetfelds angeordnet sind, wobei die erste Signalverarbeitungseinrichtung (5a) einen ersten Ausgang (9) aufweist, an den in Abhängigkeit von den ersten Messsignalen ein erstes Drehwinkelsignal ausgebbar ist, mit mindestens einer zweiten Sensoranordnung und einer zweiten Signalverarbeitungseinrichtung, (5b) wobei die zweite Sensoranordnung wenigstens zwei zweite Magnetfeldsensoren (4b, 4b') aufweist, die zum Erfassen von zueinander phasenverschobenen zweiten Messsignalen des Magnetfelds angeordnet sind, wobei die zweite Signalverarbeitungseinrichtung (5b) einen zweiten Ausgang (15) aufweist, an den in Abhängigkeit von den zweiten Messsignalen ein zweites Drehwinkelsignal ausgebbar ist, und mit einem außerhalb des Halbleiterchips angeordneten Steuergerät (14), das eine mit dem ersten Ausgang (9) und dem zweiten Ausgang (15) verbundene Vergleichseinrichtung (16) aufweiset, mittels der beim Auftreten einer Abweichung zwischen den Drehwinkelsignalen ein Fehlersignal generierbar ist, **dadurch gekennzeichnet dass** die zweite Signalverarbeitungseinrichtung (5b) in dem außerhalb des Halbleiterchips (2) angeordneten Steuergerät (14) vorgesehen ist.

2. Messvorrichtung (1) nach Anspruch 1, **dadurch gekennzeichnet, dass** die zweiten Magnetfeldsensoren (4b, 4b') in den Halbleiterchip (2) integriert sind.

3. Messvorrichtung (1) nach Anspruch 1, **dadurch gekennzeichnet, dass** sie zusätzlich zu dem ersten Halbleiterchip (2) mindestens einen zweiten, in dem Magnetfeld angeordneten Halbleiterchip aufweist, und dass die zweiten Magnetfeldsensoren (4b. 4b') in dem mindestens einen zweiten Halbleiterchip vorgesehen sind.

4. Messvorrichtung (1) nach einem der Ansprüche 1 bis 3, **dadurch gekennzeichnet, dass** die erste Signalverarbeitungseinrichtung (5a) und die zweite Signalverarbeitungseinrichtung (5b) einen unterschiedlichen Aufbau aufweisen.

5. Messvorrichtung (1) nach einem der Ansprüche 1 bis 4, **dadurch gekennzeichnet, dass** die erste Signalverarbeitungseinrichtung (5a) derart ausgestaltet ist, dass das erste Drehwinkelsignal als Analogsignal am ersten Ausgang (9) und/oder die zweite Signalverarbeitungseinrichtung derart ausgestaltet ist, dass das zweite Drehwinkelsignal als Analogsignal am zweiten Ausgang (15) ausgebbar ist.

6. Messvorrichtung (1) nach einem der Ansprüche 1 bis 5, **dadurch gekennzeichnet, dass** die ersten Magnetfeldsensoren (4a, 4a') mit Ihren Messachsen quer zueinander und/oder die zweiten Magnetfeldsensoren (4b, 4b') mit Ihren Messachsen quer zueinander angeordnet sind.

7. Messvorrichtung (1) nach einem der Ansprüche 1 bis 6, **dadurch gekennzeichnet, dass** die ersten Magnetfeldsensoren (4a, 4a') und/oder die zweiten Magnetfeldsensoren (4b, 4b') Hallplatten aufweisen, die in einen Halbleiterchip (2) integriert sind und mit Ihrer Erstreckungsebene quer zur Chipebene des Halbleiterchips (2) angeordnet sind.

8. Messvorrichtung (1) nach einem der Ansprüche 1 bis 7, **dadurch gekennzeichnet, dass** jeder zweite Magnetfeldsensor (4b, 4b') jeweils einen Ausgangsanschluss für sein zweites Messsignal aufweist, dass jeder dieser Ausgangsanschlüsse jeweils mit einem ersten Anschluss eines ersten Multiplexers verbunden ist, dass ein wahl- oder wechselweise mit den ersten Anschlüssen verbindbarer zweiter Anschluss des ersten Multiplexers über eine Verbindungsleitung mit einem dritten Anschluss eines zweiten Multiplexers verbunden ist, dass der zweite Multiplexer eine der Anzahl der ersten Anschlüssen entsprechende Anzahl vierter Anschlüsse aufweist, die wahl- oder wechselweise mit dem dritten Anschluss verbindbar und jeweils an einem Eingang der zweiten Signalverarbeitungseinrichtung (5b) angeschlossen sind, dass ein Taktgeber zum Erzeugen eines Triggersignals vorgesehen ist, der zum Synchronisieren der Multiplexer mit Adresssteuereingängen der Multiplexer verbunden ist.

9. Messvorrichtung (1) nach einem der Ansprüche 2, 4 bis 8, **dadurch gekennzeichnet, dass** der erste Multiplexer in den ersten Halbleiterchip (2) und der Taktgeber in das Steuergerät (14) integriert sind, dass der erste Ausgang (9) der ersten Sensoranordnung aus dem ersten Halbleiterchip (2) herausgeführt ist, und dass der Taktgeber über den ersten Ausgang (9) mit dem Adresssteuereingang des ersten Multiplexers verbindbar oder verbunden ist.

10. Halbleiterchip (1) für eine Messvorrichtung nach einem der Ansprüche 1-9, wobei in den Halbleiterchip (2) zumindest eine erste Sensoranordnung, eine zweite Sensoranordnung und eine erste Signalverarbeitungseinrichtung (5a) integriert sind, wobei die erste Sensoranordnung wenigstens zwei erste Magnetfeldsensoren (4a, 4a') aufweist, die zum Erfassen von zueinander phasenverschobenen ersten Messsignalen eines vom Drehwinkel eines Körpers abhängigen Magnetfelds angeordnet sind, wobei die zweite Sensoranordnung wenigstens zwei zweite Magnetfeldsensoren (4b, 4b') aufweist, die zum Erfassen von zueinander phasenverschobenen zweiten Messsignalen des Magnetfelds angeordnet sind, wobei die ersten Magnetfeldsensoren (4a, 4a') über die Signalverarbeitungseinrichtung (5a) mit einem Ausgang (9) des Halbleiterchips verbunden sind und die Signalverarbeitungseinrichtung (5a) derart ausgestaltet ist, dass am Ausgang (9) ein von den ersten Messsignalen abhängiges Drehwinkelsignal ausgebbar ist, **dadurch gekennzeichnet, dass** der Halbleiterchip (2) mindestens einen mit den zweiten Magnetfeldsensoren (4b, 4b") verbundenen AuBenanschluss (12, 12') hat, und dass über den mindestens einen Außenanschluss (12, 12') die zweiten Messsignale aus dem Halbleiterchip (2) auslesbar sind.

11. Halbleiterchip (1) nach Anspruch 10, **dadurch gekennzeichnet, dass** die erste Signalverarbeitungseinrichtung (5a) derart ausgestaltet ist, dass das Drehwinkelsignal als Analogsignal am Ausgang (9) ausgebbar ist.

12. Halbleiterchip (1) nach Anspruch 10 oder 11, **dadurch gekennzeichnet**, **dadurch gekennzeichnet, dass** die ersten Magnetfeldsensoren (4a, 4a') und/oder die zweiten Magnetfeldsensoren (4b, 4b') mit Ihren Messachsen quer zueinander angeordnet sind.

13. Halbleiterchip (1) nach einem der Ansprüche 10 bis 12, **dadurch gekennzeichnet, dass** die ersten Magnetfeldsensoren (4a, 4a') und/oder die zweiten Magnetfeldsensoren (4b, 4b') Hallplatten aufweisen, die mit Ihrer Erstreckungsebene quer zueinander und quer zur Chipebene des Halbleiterchips (2) angeordnet sind.

14. Halbleiterchip (1) nach einem der Ansprüche 10 bis 1 3, **dadurch gekennzeichnet, dass** in den Halbleiterchip (2) ein Multiplexer integriert ist, dass jeder zweite Magnetfeldsensor (4b, 4b') jeweils einen Ausgangsanschluss für sein zweites Messsignal aufweist, der mit einem ersten Anschluss des Multiplexers verbunden ist, dass ein wahl- oder wechselweise mit den ersten Anschlüssen verbindbarer zweiter Anschluss des Multiplexers mit dem Außenanschluss (12) des Halbleiterchips (2) verbunden ist, und dass der Multiplexer einen Adresssteuereingang aufweist, der mit dem Ausgang (9) des Halbleiterchips (2) verbunden ist.

15. Halbleiterchip (1) nach einem der Ansprüche 10 bis 14, **dadurch gekennzeichnet, dass** die ersten Magnetfeldsensoren (4a, 4a') nach einem anderen Messprinzip arbeiten als die zweiten Magnetfeldsensoren (4b, 4b') .

## Claims

1. Measuring device (1) for contactless redundant detection of a rotational angle of a body, with a magnetic field generating device for generating at least one magnetic field dependent on the rotational angle to be detected, with a semiconductor chip (2) in which at least one first sensor arrangement and first signal processing device (5a) are integrated, wherein the first sensor arrangement comprises at least two first magnetic field sensors (4a, 4a') which are arranged for detecting first measurement signals, which are displaced in the phase relative to one another, of the magnetic field, wherein the first signal processing device (5a) has a first output (9) at which a first rotational angle signal can be output in dependence on the first measurement signals, with at least one second sensor arrangement and second signal processing device (5b), wherein the second sensor arrangement comprises at least two second magnetic field sensors (4b, 4b') arranged for detection of second measurement signals, which are disposed in phase relative to one another, of the magnetic field, wherein the second signal processing device (5b) has a second output (15) at which a second rotational angle signal can be output in dependence on the second measurement signals, and with a control apparatus (14), which is arranged outside the semiconductor chip and which comprises a comparison device (16), which is connected with the first output (9) and the second output (15) and by means of which an error signal can be generated on occurrence of a deviation between the rotational angle signals, **characterised in that** the second signal processing device (5b) is provided in the control apparatus (14) arranged outside the semiconductor chip (2).

2. Measuring device (1) according to claim 1, **characterised in that** the second magnetic field sensors (4b, 4b') are integrated in the semiconductor chip (2).

3. Measuring device (1) according to claim 1, **characterised in that** it comprises, additionally to the first semiconductor chip (2), at least one second semiconductor chip arranged in the magnetic field and that the second magnetic field sensors (4b, 4b') are provided in the at least one second semiconductor chip.

4. Measuring device (1) according to any one of claims 1 to 3, **characterised in that** the first signal processing device (5a) and the second signal processing device (5b) have a different construction.

5. Measuring device (1) according to any one of claims 1 to 4, **characterised in that** the first signal processing device (5a) is so designed that the first rotational angle signal can be output as an analog signal at the first output (9) and/or the second signal processing device is so designed that the second rotational angle signal can be output as an analog signal at the second output (15).

6. Measuring device (1) according to any one of claims 1 to 5, **characterised in that** the first magnetic field sensors (4a, 4a') are arranged with the measuring axes thereof transversely to one another and/or the second magnetic field sensors (4b, 4b') are arranged with the measuring axes thereof transversely to one another.

7. Measuring device (1) according to any one of claims 1 to 6, **characterised in that** the first magnetic field sensors (4a, 4a') and/or the second magnetic field sensors (4b, 4b') comprise Hall plates which are integrated in a semiconductor chip (2) and are arranged with the length plane thereof transversely to the chip plane of the semiconductor chip (2).

8. Measuring device (1) according to any one of claims 1 to 7, **characterised in that** each second magnetic field sensor (4b, 4b') has a respective output connection for its second measurement signal, that each of these output connections is connected with a respective first connection of a first multiplexer, that a second connection, which is selectably or alternately connectible with the first connections, of the first multiplexer is connected by way a connecting line with a third connection of a second multiplexer, that the second multiplexer has a number of fourth connections corresponding with the number of the first connections, the fourth connections being selectably or alternately connectible with the third connection and each connected with a respective input of the second signal processing device (5b), and that a clock signal transmitter for generating a trigger signal is provided, which for synchronisation of the multiplexer is connected with address control inputs of the multiplexer.

9. Measuring device (1) according to any one of claims 2 and 4 to 8, **characterised in that** the first multiplexer is integrated in the first semiconductor chip (2) and the clock signal transmitter in the control apparatus (14), that the first output (9) of the first sensor arrangement is led out of the first semiconductor chip (2) and that the clock signal transmitter is connectible or connected by way of the first output (9) with the address control input of the first multiplexer.

10. Semiconductor chip (1) for a measuring device according to any one of claims 1 to 9, wherein at least one first sensor arrangement, second sensor arrangement and first signal processing device (5a) are integrated in the semiconductor chip (2), wherein the first sensor arrangement comprises at least two first magnetic field sensors (4a, 4a') arranged for detecting first measurement signals, which are displaced in phase relative to one another, of a magnetic field dependent on the rotational angle of a body, wherein the second sensor arrangement comprises at least two second magnetic field sensors (4b, 4b') arranged for detecting second measurement signals, which are displaced in phase relative to one another, of the magnetic field, wherein the first magnetic field sensors (4a, 4a') are connected by way of the signal processing device (5a) with an output (9) of the semiconductor chip and the signal processing device (5a) is so designed that a rotational angle signal dependent on the first measurement signals can be output at the output (9), **characterised in that** the semiconductor chip (2) has at least one external connection (12, 12') connected with the second magnetic field sensors (4b, 4b') and that the second measurement signals can be read out of the semiconductor ship (2) by way of the at least one external connection (12, 12').

11. Semiconductor chip (1) according to claim 10, **characterised in that** the first signal processing device (5a) is so designed that the rotational angle signal can be output at the output (9) as an analog signal.

12. Semiconductor chip (1) according to claim 10 or 11, **characterised in that** the first magnetic field sensors (4a, 4a') and/or the second magnetic field sensors (4b, 4b') are arranged with their measuring axes transversely to one another.

13. Semiconductor chip (1) according to any one of claims 10 to 12, **characterised in that** the first magnetic field sensors (4a, 4a') and/or the second magnetic field sensors (4b, 4b') comprise Hall plates which are arranged with the length planes thereof transversely to one another and transversely to the chip plane of the semiconductor chip (2).

14. Semiconductor chip (1) according to any one of claims 10 to 13, **characterised in that** a multiplexer is integrated in the semiconductor chip (2), that each second magnetic field sensor (4b, 4b') has, for its second measurement signal, a respective external connection connected with a first connection of the multiplexer, that a second connection, which is selectably or alternately connectible with the first connections, of the multiplexer is connected with the external connection (12) of the semiconductor chip (2) and that the multiplexer has an address control input which is connected with the output (9) of the semiconductor chip (2).

15. Semiconductor chip (1) according to any one of claims 10 to 14, **characterised in that** the first magnetic field sensors (4a, 4a') operate according to a measuring principle different from the second magnetic field sensors (4b, 4b').

## Revendications

1. Dispositif de mesure (1) pour la détermination redondante sans contact d'un angle de rotation d'un corps, comprenant un ensemble de génération d'un champ magnétique pour générer au moins un angle de rotation à détecter dépendant du champ magnétique avec une puce semi-conductrice (2) dans lequel sont intégrés au moins un premier arrangement de capteur et un premier ensemble de traitement du signal (5a) et dans lequel le premier arrangement de capteur comprend au moins deux premiers capteurs de champ magnétique (4a, 4a') pour la détection des premiers signaux de mesure du champ magnétique décalés entre eux en phase, dans lequel le premier ensemble de traitement du signal (5a) présente une première sortie (9) qui peut délivrer un premier signal d'angle de rotation, dépendant des premiers signaux de mesure, avec au moins un deuxième arrangement de capteur et un deuxième ensemble de traitement du signal (5b), dans lequel le deuxième arrangement de capteur comporte au moins deux deuxièmes capteurs de champ magnétique (4b, 4b') pour la détection des deuxièmes signaux de mesure décalés entre eux en phase du champ magnétique, dans lequel le deuxième ensemble de traitement de signal (5b) présente une deuxième sortie (15) sur laquelle, en fonction des deuxièmes signaux de mesure peut être délivré un deuxième signal de rotation d'angle et comprenant un contrôleur (14), extérieur à la puce (2) semi-conductrice, présentant un comparateur (16) connecté à la première sortie (9) et à la deuxième sortie (15), au moyen duquel lors de la survenue d'une différence entre les signaux d'angle de rotation est généré un signal d'erreur
**caractérisé en ce que** le deuxième ensemble de traitement du signal (5b) est prévu dans le contrôleur (14) à l'extérieur de la puce semi-conductrice (2).

2. Dispositif de mesure (1) selon la revendication 1 **caractérisé en ce que** le deuxième capteur de champ magnétique (4b, 4b') est intégré dans la puce semi-conductrice (2).

3. Dispositif de mesure (1) selon la revendication 1 **caractérisé en ce que**, en complément de la première puce semi-conductrice (2), il est prévu au moins une deuxième puce semi-conductrice placée dans le champ magnétique et **en ce que** les deuxièmes capteurs de champ magnétique (4b,4b') sont prévus dans la au moins deuxième puce semi-conductrice.

4. Dispositif de mesure (1) selon l'une des revendications 1 à 3 **caractérisé en ce que** le premier ensemble de traitement du signal (5a) et le deuxième ensemble de traitement du signal (5b) présentent une structure constructive différente.

5. Dispositif de mesure (1) selon l'une des revendications 1 à 4 **caractérisé en ce que** le premier ensemble de traitement du signal (5a) présente une configuration telle que le premier signal d'angle de rotation peut être délivré par la première sortie (9) en tant que signal analogique et/ou le deuxième ensemble de traitement du signal (5b) présente une configuration telle que le deuxième signal d'angle de rotation peut être délivré par la deuxième sortie (15) en tant que signal analogique.

6. Dispositif de mesure (1) selon l'une des revendications 1 à 5 **caractérisé en ce que** les premiers capteurs de champ magnétique (4a, 4a') sont disposés l'un par rapport à l'autre de façon que leurs axes de mesure soient croisés et/ou **en ce que** les deuxièmes capteurs de champ magnétique (4b, 4b') sont disposés l'un par rapport à l'autre de façon que leurs axes de mesure soient croisés.

7. Dispositif de mesure (1) selon l'une des revendications 1 à 6 **caractérisé en ce que** les premiers capteurs de champ magnétique (4a, 4a') et/ou les deuxièmes capteurs de champ magnétique (4b, 4b') présentent des plaquettes à effet Hall, intégrées dans une puce semi-conductrice (2) et dont les plans d'extension sont perpendiculaires au plan de la microplaquette de la puce semi-conductrice (2).

8. Dispositif de mesure (1) selon l'une des revendications 1 à 7 **caractérisé en ce que** chaque deuxième capteur de champ magnétique (4b, 4b') présente à chaque fois une connexion de sortie pour son deuxième signal de mesure, **en ce que** chacune de ces connexions de sortie est reliée à chaque fois à une première connexion d'un premier multiplexeur, **en ce qu'**une deuxième connexion du premier multiplexeur, reliable aux premières connexions de façon sélectionnable ou commutable, est reliée à une troisième connexion du deuxième multiplexeur au moyen d'une liaison conductrice, **en ce que** le deuxième multiplexeur reliable à la troisième connexion de façon sélectionnable ou commutable, et relié à chaque fois à une entrée du deuxième ensemble de traitement du signal(5b), présente des quatrièmes connexions dont le nombre correspond au nombre des premières connexions, **en ce qu'**il est prévu un séquenceur pour la génération d'un signal de déclenchement, qui pour la synchronisation du multiplexeur, est relié aux entrées de commande d'adresses du multiplexeur.

9. Dispositif de mesure selon l'une des revendications 2, et de 4 à 8 **caractérisé en ce que** le premier multiplexeur est intégré dans la première puce semi-conductrice (2) et le séquenceur est intégré dans le contrôleur (14), **en ce que** la première sortie (9) du premier arrangement de capteur sort de la première puce semi-conductrice (2) et **en ce que** le séquenceur est reliable ou relié à l'entrée de commande d'adresses du premier multiplexeur par la sortie (9).

10. Microplaquette de semi-conducteurs (1) pour un dispositif de mesure selon l'une des revendications 1-9 dans lequel sont intégrés dans la puce semi-conductrice (2) au moins un premier arrangement de capteur, un deuxième arrangement de capteur, et un premier dispositif de traitement de signal (5a), dans lequel le premier arrangement de capteur présente au moins deux capteurs de champ magnétique (4a, 4a') qui sont prévus pour la détection de premiers signaux de mesure décalés entre eux en phase de l'angle de rotation d'un corps dépendant du champ magnétique, dans lequel les deux arrangements de capteur présentent au moins deux deuxièmes capteurs de champ magnétique (4b, 4b'), qui sont prévus pour la détection des deuxièmes signaux de mesure du champ magnétique décalés entre eux en phase, dans lequel les premiers capteurs de champ magnétique (4a,4a') sont reliés à la sortie (9) de la puce semi-conductrice (2) à travers le dispositif de traitement du signal (5a) et le dispositif de traitement du signal (5a) étant constitué de façon qu'à la sortie (9) puisse être délivré un signal d'angle de rotation dépendant des premiers signaux de mesure, **caractérisé en ce que** la puce semi-conductrice (2) possède au moins une connexion extérieure (12, 12') connectée au second capteur de champ magnétique (4b, 4b') et **en ce qu'**à travers la au moins connexion extérieure (12, 12'), les deuxièmes signaux de mesure de la puce semi-conductrice (2) sont sélectionnables.

11. Microplaquette de semi-conducteurs (1) selon la revendication 10, **caractérisée en ce que** le premier dispositif de traitement du signal (5a) est configuré de façon que le signal de l'angle de rotation puisse être délivré à la sortie (9) sous la forme d'un signal analogique.

12. Microplaquette de semi-conducteurs (1) selon la revendication 10 ou 11, **caractérisée en ce que** les premiers capteurs de champ magnétique (4a, 4a'), et/ou les deuxièmes capteurs de champ magnétique (4b,4b') ont leurs axes de mesures croisés l'un par rapport à l'autre.

13. Microplaquette de semi-conducteurs (1) selon l'une des revendications 10 à 12, **caractérisée en ce que** les premiers capteurs de champ magnétique (4a, 4a') et/ou les deuxièmes capteurs de champ magnétique (4b, 4b') présentent des plaquettes à effet Hall, dont les plans d'extension sont perpendiculaires l'un à l'autre et perpendiculaires au plan de la plaquette de la puce semi-conductrice (2).

14. Microplaquette de semi-conducteurs (1) selon l'une des revendications 10 à 13, **caractérisée en ce qu'**un multiplexeur est intégré dans la puce semi-conductrice (2), **en ce que** chaque deuxième capteur de champ magnétique (4b, 4b') présente à chaque fois une connexion de sortie pour son deuxième signal de mesure, qui est reliée à une première connexion du multiplexeur, **en ce qu'**une deuxième connexion du multiplexeur est reliable de façon sélectionnable ou commutable aux premières connexions est relié à la connexion extérieure (12) de la puce semi-conductrice (2) et **en ce que** le multiplexeur présente une entrée de commande d'adresse qui est reliée à la sortie de la puce semi-conductrice (2).

15. Microplaquette de semi-conducteurs (1) selon l'une des revendications 10 à 14, **caractérisée en ce que** les premiers capteurs de champ magnétique (4a, 4a') travaillent selon un autre principe de mesure que les deuxièmes capteurs de champ magnétique (4b, 4b').
